# EUROPEAN PATENT APPLICATION

(11) **EP 2 660 767 A1**
(43) Date of publication of application: **06.11.2013**
(21) Application number: 10861239.1
(22) Date of filing: 30.12.2010
(51) Int. Cl.: G06Q 40/00

(54) **SYSTEM FOR PLAYING ON THE STOCK MARKET (EMBODIMENTS)**

(71) Applicant: Kligman, Ilya Vladimirovich, St.Petersburg 197198 (RU); Migalev, Cergey Vladimirovich, Rostov-na-Donu 344000 (RU)
(72) Inventor: Kligman, Ilya Vladimirovich, St.Petersburg 197198 (RU); Migalev, Cergey Vladimirovich, Rostov-na-Donu 344000 (RU)
(74) Representative: Kietzmann, Manfred
(86) International application number: PCT/RU2010/000808
(87) International publication number: WO 2012/091603

(57) **Abstract**

The invention relates to the systems for assistance in financial transactions. The exchange trading system comprising of a computer-assisted device having a feature of access to information about tendering and output of this information to the users' terminals, as well as a feature of input of stake for increase or decrease in the cost of a quotation and cost of one minimum price change for this quotation. Terminals for real time trading sessions on the exchange, represented by the mobile communication devices supporting protocols of this communication or wireless data transmission technologies are used. The computer-assisted device is represented by a server having a feature of staking and calculation of profit and loss within the amount of money on the user's account. The control unit for the personal user account state has a feature of control for the state of the user's account registered in the organization of trading host and its crediting by means of payment systems and money input devices and transfer of money to the personal account of the user or payment by cash.

## Description

The invention relates to the systems for assistance in financial transactions, providing fast trading and fast distribution of material remuneration as a result of trading.

The prior art is the exchange trading system comprising of a computer; many information sets about tendering received by the computer, and each of the abovementioned information sets about tendering describes trading session of the first trader; many information sets about quotas of the trading received by the computer, and each of the abovementioned information sets about quotas of the trading describes trading held by the order of the second trader; set of the preset acceptable parameters of trading and software features carried out by the computer to compare information sets about tendering with information sets about quotas of the trading and to define coincidences if information set about tendering and information set about quotas of the trading conform within a set of preset acceptable trading parameters (RU No.2259586, G 06 F 17/60, published 2005.08.27).

Weakness of the present systems is its complexity not only in hardware but also in insufficient functionality excluding possibility of remote access to the trading of other persons, but not only officially registered for participation in trading.

It is known in the art the exchange trading system comprising of a computer-assisted device having a feature of access to information about tendering and output of this information to the users' terminals, as well as a feature of input of stake for increase or decrease in the cost of one currency pair and cost of one minimum price change for this currency pair, as well as control unit for the user's accounts, thus for real time trading sessions on the exchange the cell phone supporting a WAP mode is used as a terminal by means of which the tender calls a broker accredited on the exchange and gives instructions to buy/sale within those amounts which he transferred in advance to the exchange account (see the official site «Betforex.ru» on the Internet: http://www.betforex.ru/partner.html, and in which in it is possible to hold trading sessions online, 2004-2005).

The disadvantage of this system is that to participate in trading sessions a trader at first has to transfer fixed amount of money to the exchange account, sign a contract with a broker of this exchange, and his participation in trading is indirect, that is by giving instructions to the broker. It is reasonable that such system is not flexible and does not allow to promptly solve a financial part of trading, for example, does not allow to promptly credit the account on the exchange to continue a session started and not to interrupt it. Use of a phone supporting a WAP mode is necessary only to have opportunity to receive quotations directly to the monitor and, based on the information received, to give instructions to the broker by the same phone.

From RU No. 67744, G06F17/00 published 27.10.2007 it is known that the prior art is the exchange trading system comprising of a computer-assisted device having a feature of access to information about tendering and output of this information to the users' terminals, as well as a feature of input of stake for increase or decrease in the cost of a quotation and cost of one minimum price change for this quotation, as well as control unit for the users' accounts, thus a cell phone supporting a WAP mode support is used as the terminal, the abovementioned computer-assisted device is represented as a server of a mobile network operator, and a billing system of the mobile network operator is used as a control unit for the users' accounts to control the stakes and profit and loss calculation within the amount of money on the cell phone account of the user. Besides, there will be an option according to which the abovementioned computer-assisted device is represented by a server having a feature of staking and calculation of profit and loss within the amount of money on the cell phone account of the user and a feature of transfer of part of that amount from this account to the mobile network operator for using a WAP mode.

The disadvantage of this system is that it does not provide for possible use of modern mechanisms of account crediting and receiving of a premium, besides, control for the account state is assigned to a billing system that limits the user 's possibilities to use money except for those that are available on the mobile network operator account.

The given solution is accepted as a prototype. The object of the present invention is to achieve the technical result consisting in enhancement of financial possibilities of access to trading sessions in remote access and real time mode.

The claimed technical result for the first system is achieved in that the exchange trading system, comprising of a computer-assisted device having a feature of access to information about tendering and output of this information to the users' terminals, as well as a feature of input of stake for increase or decrease in the cost of at least one quotation and at least one cost of one minimum price change for this quotation, control unit for the user's accounts as well as terminals for real time trading sessions on the exchange, represented by the mobile communication devices supporting protocols of this communication or wireless data transmission technologies, thus the specified computer-assisted device is represented by a server having a feature of staking and calculation of profit and loss within the amount of money on the user's account, the specified computer-assisted device in the form of a server has a feature of the user's account state control on the basis of information of the mobile network operator billing system and transfer or writing off of money to/from this account following the trading results.

The claimed technical result for the second system is achieved in that the exchange trading system, comprising of a computer-assisted device having a feature of access to information about tendering and output of this information to the users' terminals, as well as a feature of input of stake for increase or decrease in the cost of at least one quotation and at least one cost of one minimum price change for this quotation, control unit for the user's accounts as well as terminals for real time trading sessions on the exchange, represented by the mobile communication devices supporting protocols of this communication or wireless data transmission technologies, thus the specified computer-assisted device is represented by a server having a feature of staking and calculation of profit and loss within the amount of money on the user's account, control unit for the user's accounts has a feature of control for the state of the user's account registered in the organization of trading host and its crediting by means of payment systems and money input devices and transfer of money to the personal account of the user or payment"by cash".

The specified features are essential and are interconnected with development of a steady set of essential features, sufficient to receive the demanded technical result.

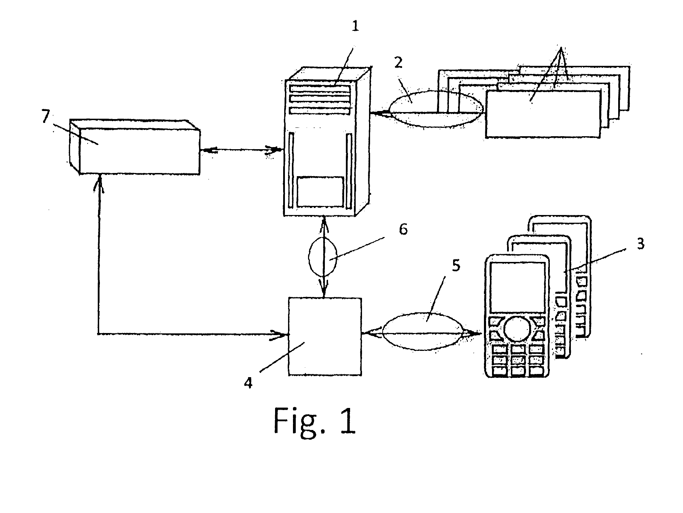

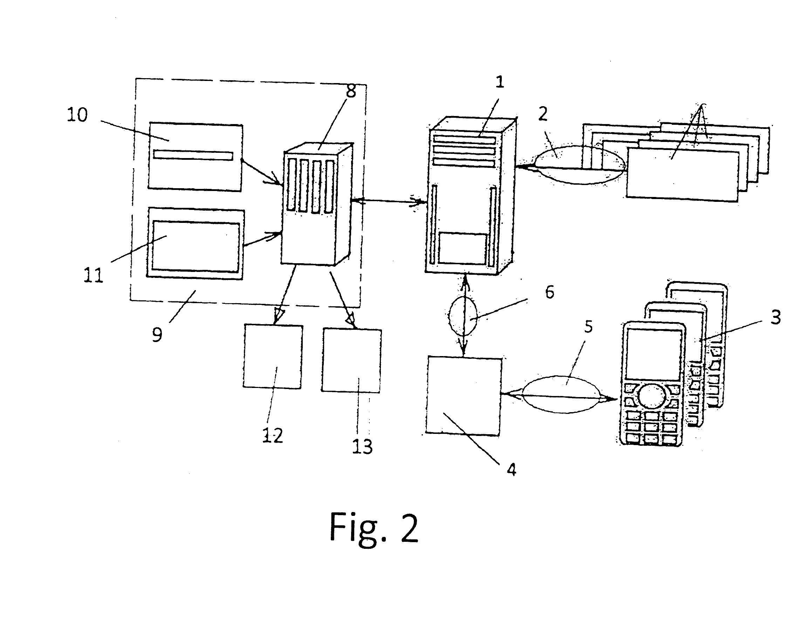

The present invention is explained by specific cases of embodiment which, however are not unique, but demonstrate possibility of achievement of demanded technical result. On fig.1 - the first design option of the system with using 1 billing structure of the mobile network operator; Fig.2 - the second design option of the system by the example of use of payment structure of the trading host. According to the invention the first design option of the trading system is illustrated on fig.1. The system comprises the computer-assisted device 1 having feature of access, for example by the Internet 2, to information 3 about tendering and output of this information to the user's terminals 4, as well as feature of input of stake for increase or decrease in the cost of one currency pair and cost of one minimum price change for this currency pair. To provide possibility to hold trading sessions in real time mode the cell (mobile) phone is used as the terminal functioning in the mobile operator network 4 supporting protocols 5 of this communication or wireless data transmission technologies 6.

The computer-assisted device 1 is represented by a server having a feature of staking and calculation of profit and loss within the amount of money on the user's account. This computer-assisted device 1 in the form of a server has a feature of the user's account state control on the basis of information of the mobile network operator 4 billing system 7 and transfer or writing off of money to/from this account following the trading results. The billing system 7 of the mobile network operator 4 is represented by the control unit for the users' accounts and for the stakes and profit and loss calculation within the amount of money on the cell phone account of the user.

Using such sources as "Reuter", "Tenfore", "BComberg" through the WAP-MTS.RU service 4 quotations are displayed on the cell phone 5, and transaction carried out by the client are recorded and processed. The client in real time mode makes transactions for currency pairs from the cell phone 5 within the amount of money on the phone account and transfers this information to the device 1. Payment of a premium (loss) to a fixed amount is made to the account or from the account of the cell phone user.

The second design option of the system is illustrated on Fig.2. As distinct from the first design option, maintaining the main components of the system, except for the billing part, the second option is characterized in that there is a control unit 8 for the personal user account state which having a feature of control for the state of the user's account registered in the organization 9 of trading host and its crediting by means of payment systems 10 with different mechanisms and money input devices 11 and transfer of money to the personal account 12 of the user or payment by cash 13. The present invention is industrially applicable as it can be implemented using real-life cell communication structures and remote access modes to information agencies.

## Claims

1. The exchange trading system, comprising of a computer-assisted device having a feature of access to information about tendering and output of this information to the users' terminals, as well as a feature of input of stake for increase or decrease in the cost of at least one quotation and at least one cost of one minimum price change for this quotation, as well as terminals for real time trading sessions on the exchange, represented by the mobile communication devices supporting protocols of this communication or wireless data transmission technologies, thus the specified computer-assisted device is represented by a server having a feature of staking and calculation of profit and loss within the amount of money on the user's account, **characterized in that** the specified computer-assisted device in the form of a server has a feature of the user's account state control on the basis of information of the mobile network operator billing system and transfer or writing off of money to/from this account following the trading results.

2. The exchange trading system, comprising of a computer-assisted device having a feature of access to information about tendering and output of this information to the users' terminals, as well as a feature of input of stake for increase or decrease in the cost of at least one quotation and at least one cost of one minimum price change for this quotation, control unit for the user's accounts as well as terminals for real time trading sessions on the exchange, represented by the mobile communication devices supporting protocols of this communication or wireless data transmission technologies, thus the specified computer-assisted device is represented by a server having a feature of staking and calculation of profit and loss within the amount of money on the user's account **characterized in that** the control unit for the personal user account state having a feature of control for the state of the user's account registered in the organization of trading host and its crediting by means of payment systems and money input devices and transfer of money to the personal account of the user or payment by cash.
